# EUROPEAN PATENT APPLICATION

(11) **EP 2 985 846 A1**
(43) Date of publication of application: **17.02.2016**
(21) Application number: 14180978.0
(22) Date of filing: 14.08.2014
(51) Int. Cl.: H02J 5/00, H02J 7/02, H04B 5/00

(54) **Wireless power transmission**

(71) Applicant: NXP B.V., 5656 AG Eindhoven (NL)
(72) Inventor: Büthker, Henricus Cornelis Johannes, 5656 Eindoven (NL); Berkhout, Marco, 5656 Eindoven (NL); Van Lammeren, Johannes Petrus Maria, 5656 Eindoven (NL)
(74) Representative: Miles, John Richard

(57) **Abstract**

Apparatus and methods for extracting wirelessly transmitted electrical power are described. A wireless electrical power receiver comprises a receiver resonator arranged to inductively generate an AC electrical current and a rectifier to receive and convert the AC electrical current from the receiver resonator into DC electrical power which is supplied to a load. A switching arrangement can selectively provide a short circuit to retain the AC electrical current within the receiver resonator when the switch is operated and a controller can supply a control signal to operate the switching arrangement to control the AC electrical current supplied to the rectifier.

## Description

The present invention relates to wireless power transmission and in particular to apparatus and methods for controlling the power extracted from wirelessly transmitted electrical power.

Wireless power transfer is known generally and can be used to provide wireless charging of on board electrical power stores of portable devices. For example, "Loosely-Coupled Wireless Power Transfer: Physics, Circuits, Standards", Grajski K. A., et al., IMWS-IWPT2012 Proceedings, pages 9-14, provides an overview of the physics, circuits and standards relating generally to loosely coupled wireless power transfer.

A number of wireless charging standards have been developed. The Qi standard has been developed by the Wireless Power Consortium and relates to inductive electrical power transfer over relatively small distances, for example up to 1cm. It is based on a high coupling factor and short distances between transmitting and receiving coils.

In order to enable energy transfer over larger distances, resonant systems have been developed such as the Rezence standard of the Alliance for Wireless Power (A4WP). Such resonant system are typically based on electromagnetic induction and generate an AC electrical signal in the power receiving unit. In some instances the power receiving unit may require DC electrical power and so further circuitry or devices may be provided in order to convert or otherwise modify the received AC electrical power into a more readily useable form.

However, the inclusion of further circuitry to handle the received AC electrical power may negatively impact the power receiving unit in other ways. For example, the further circuitry may make the power receiving unit more complicated, may increase its bulk or may lead to decreases in other aspects of electrical performance such as power consumption or electrical power loss.

Hence, other approaches to electrical power handling in wireless power receiving devices that use electromagnetic techniques to transfer electrical power may be beneficial. According to a first aspect of the present invention, there is provided a wireless electrical power receiver, comprising: a receiver resonator arranged to inductively generate an AC electrical current; a rectifier connected to the receiver resonator to receive and convert the AC electrical current from the receiver resonator into DC electrical power; a load arranged to receive DC electrical power from the rectifier; a switching arrangement to selectively provide a short circuit to retain the AC electrical current within the receiver resonator when the switch is operated; and a controller configured to supply a control signal to operate the switching arrangement to control the AC electrical current supplied to the rectifier.

The invention may control the power extracted from a wireless resonant power transfer system. It may avoid or reduce the need for extra components or devices which may conventionally be used, such as a DC-DC converter or extra inductors. The receiver resonator may behave as a current source and any excess current is not rectified and delivered to the output, but may be shorted and kept in the receiver resonator.

The controller may be further configured to supply the control signal to operate the switching arrangement to provide the short circuit when the AC electrical current in the receiver resonator passes through zero. This may allow reduced loss or even lossless switching.

The controller may be further configured to remove the control signal to cause the switching arrangement to remove the short circuit based on the amount of DC power required by the load. Varying the duty cycle or duration of the switching control signal can be used to control the amount of rectified electrical power supplied to the load.

The rectifier may be an active rectifier or synchronous rectifier. The active rectifier may comprise a plurality of electrically operable switches. The controller or an additional controller may be further configured to supply rectification control signals to the plurality of electrically operable switches to control rectification of the AC electrical current into DC electrical power. The electrically operable switches may be transistors. Suitable transistors include bipolar transistors, JFETs, IGBTs or MOSFETs. IGBTs are particularly suitable for higher power applications.

The switching arrangement may comprise one or more of the plurality of electrically operable switches of the rectifier. The same electrically operable switch or switches may act both as part of the switching arrangement and also as part of the rectifier. This may reduce the complexity of the circuitry and the number of components used.

The rectifier may have a full bridge topology. The rectifier may include a first pair of electrically operable switches and a second pair of electrically operable switches which co-operate to provide rectification. A first electrically operable switch of the first pair and a first electrically operable switch of the second pair may co-operate to provide the switching arrangement.

The controller may be further configured to supply the control signal to operate the switching arrangement to provide the short circuit each time the AC electrical current in the receiver resonator passes through zero. The switching arrangement may provide the short circuit twice during each cycle of the AC electrical current of the receiver resonator.

The rectifier may have a Greinacher voltage doubler topology.

The controller may be further configured to supply the control signal to operate the switching arrangement to provide the short circuit every other time the AC electrical current in the receiver resonator passes through zero. The switching arrangement may provide the short circuit only once during each cycle of the AC electrical current of the receiver resonator

The rectifier may have a plurality of electrically operable switches arranged in a full bridge topology and the controller may be further configured to control operation of a first pair of electrically operable switches to act as a Greinacher topology voltage doubler and to control an electrically operable switch of a second pair of electrically operable switches to provide the switching arrangement.

The rectifier may have a voltage doubler topology.

The switching arrangement may comprise a bi-directional blocking switch. The switching arrangement may be provided by a pair of transistors connected in anti-series.

The rectifier may have a rectifier topology which provides at least some or significant impedance matching between the receiver resonator and the load. Fewer, or no other, impedance matching network or components may then need to be included in the wireless electrical power receiver.

The controller may be further configured to control the wireless power receiver to operate as voltage regulator which directly controls the output voltage of the DC electrical power supplied to the load. In this case, no DC-DC converter is required

The wireless power receiver may further comprise a DC-DC converter arranged between the rectifier and the load to receive DC electrical power from the rectifier and to supply converted DC electrical power to the load. The rectifier and switching arrangement may then act as a stabilizer for the DC-DC converter.

A second aspect of the invention provides an electrical device or apparatus including a wireless power receiver according to the first aspect of the invention and wherein the load is a re-chargeable battery. The electrical device or apparatus may be of many different types. For example, the electrical device may be a mobile phone, a household appliance (e.g. a kitchen or a bathroom appliance) or a medical device. The electrical apparatus may be an electrical machine or an electrical vehicle.

A third aspect of the invention provides a method for extracting DC electrical power from an induced AC electrical signal, the method comprising: rectifying an AC electrical current produced by induction by a receiver resonator into DC electrical power; and periodically short circuiting the receiver resonator to retain the AC electrical current within the receiver resonator.

Preferred features of the third aspect of the invention may correspond to method counterparts of the preferred features of the first and/or second aspects of the invention.

Embodiments of the invention will now be described in detail, by way of example only, and with reference to the accompanying drawings, in which:
Figure 1 shows a schematic block diagram of a wireless power transfer system;
Figure 2 shows a schematic equivalent circuit diagram of the wireless power transfer system of Figure 1;
Figure 3 shows a graph illustrating the variation of the power transfer efficiency with load for different coupling strengths for the wireless power transfer system illustrated in Figures 1 and 2;
Figure 4 shows a schematic circuit diagram of a wireless power transfer system including a first embodiment of a wireless power receiver according to the invention;
Figure 5 shows a schematic circuit diagram of the wireless power transfer system of

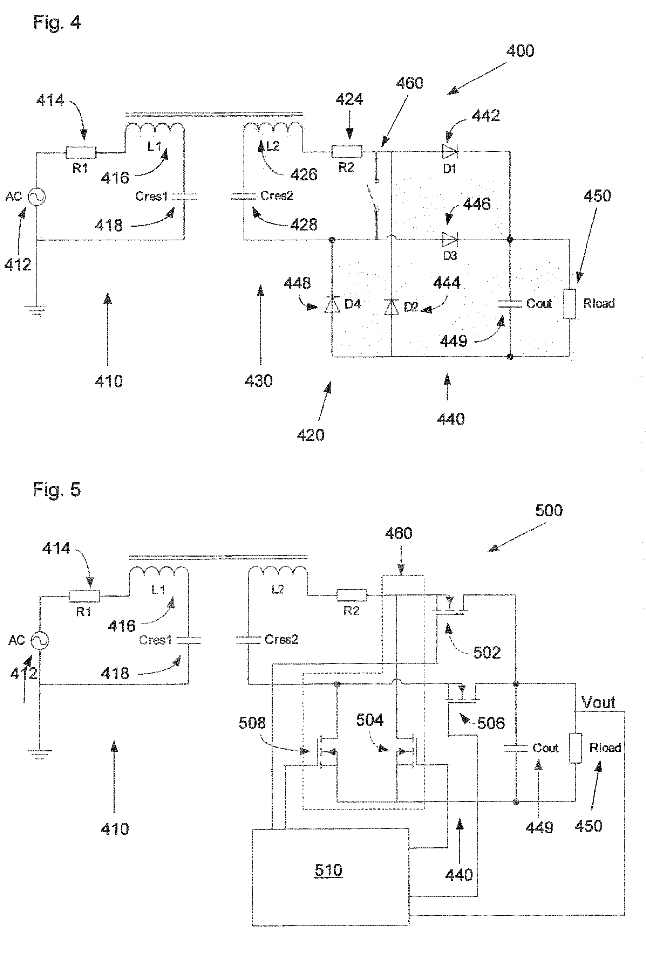

Figure 4 including a more detailed implementation of the wireless power receiver;

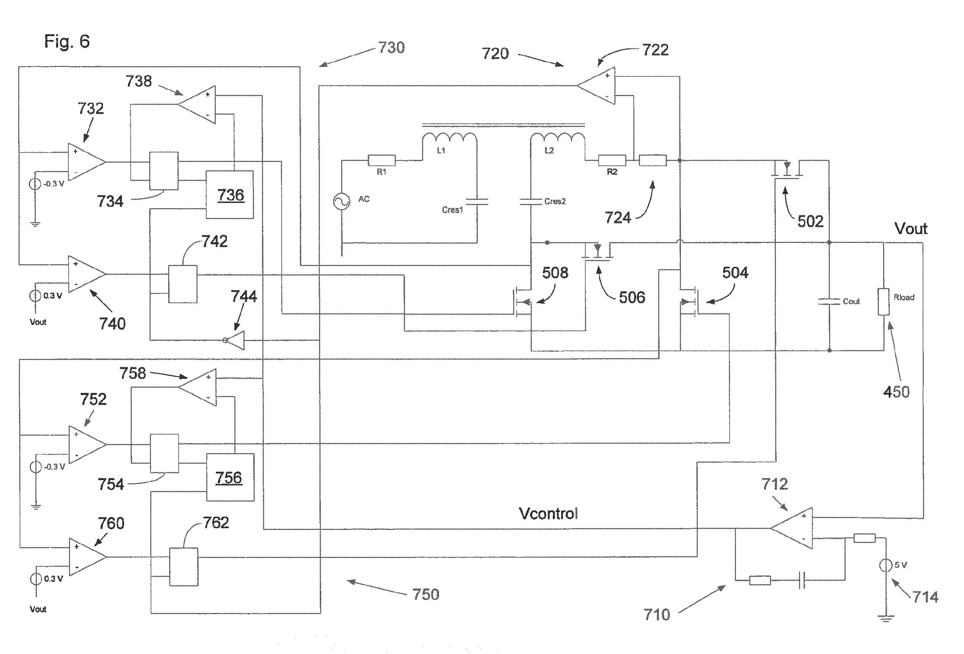

Figure 6 shows a schematic circuit diagram of the wireless power transfer system of
Figure 5 including a more detailed implementation of the controller;

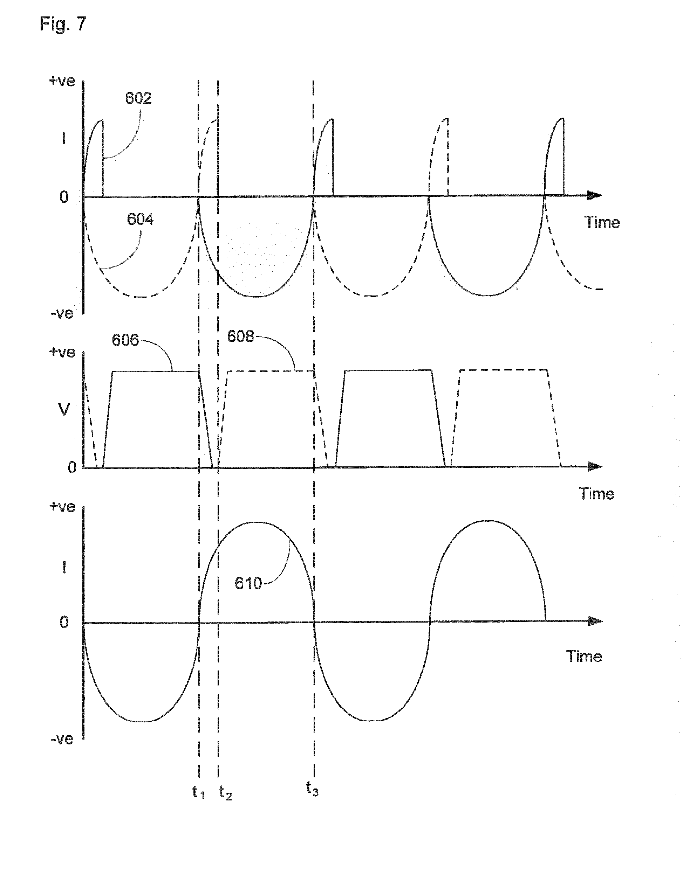

Figure 7 shows a series of traces of the drain current, drain voltage and receiver resonator current for various parts of the circuit shown in Figure 5 as a function of time;

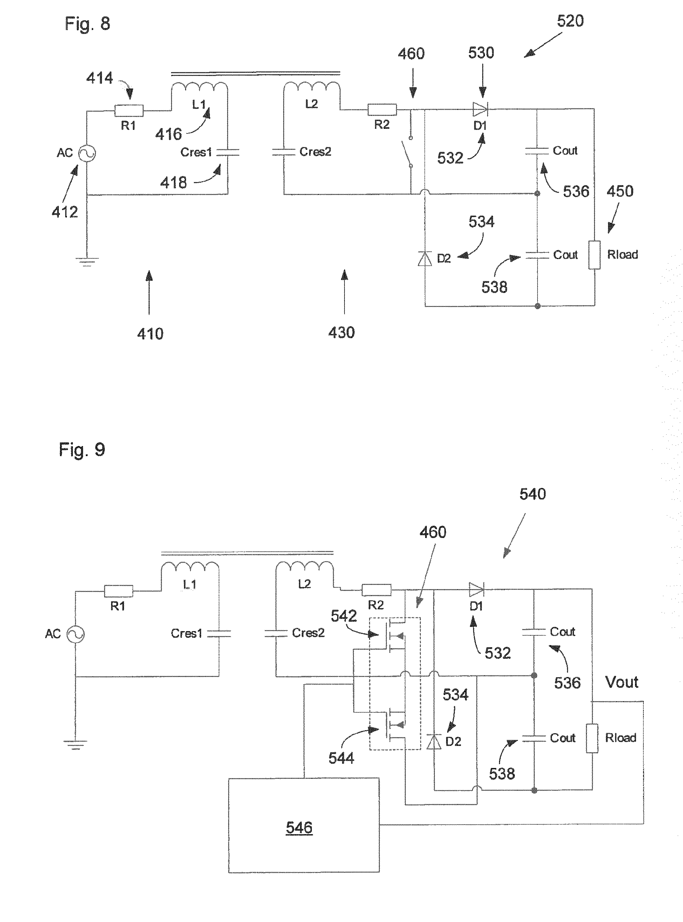

Figure 8 shows a schematic circuit diagram of a wireless power transfer system including a second embodiment of a wireless power receiver according to the invention;
Figure 9 shows a schematic circuit diagram of the wireless power transfer system of
Figure 8 including a more detailed implementation of the wireless power receiver;

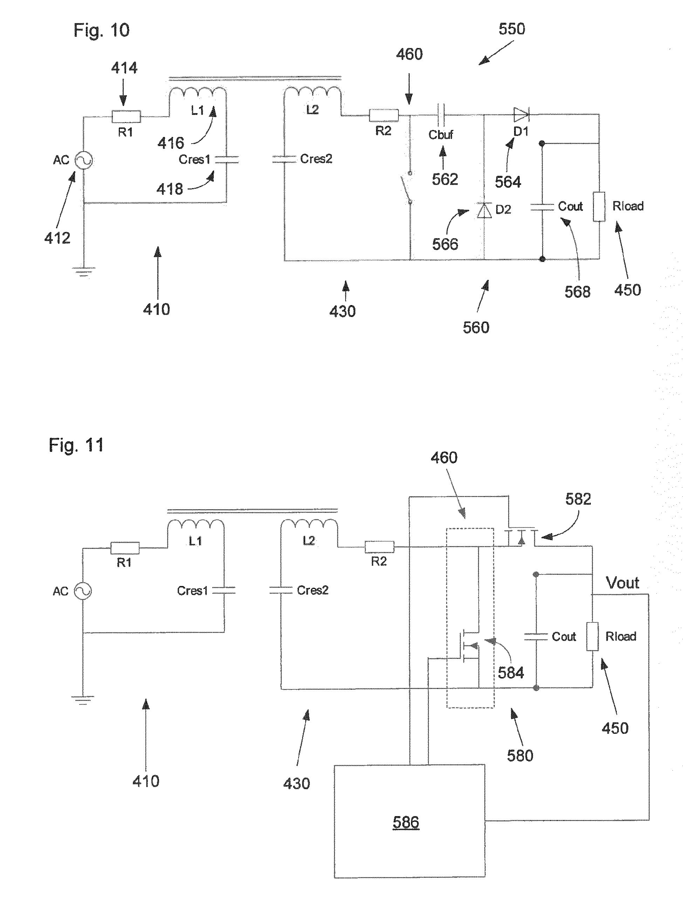

Figure 10 shows a schematic circuit diagram of a wireless power transfer system including a third embodiment of a wireless power receiver according to the invention;
Figure 11 shows a schematic circuit diagram of the wireless power transfer system of
Figure 10 including a more detailed implementation of the wireless power receiver;

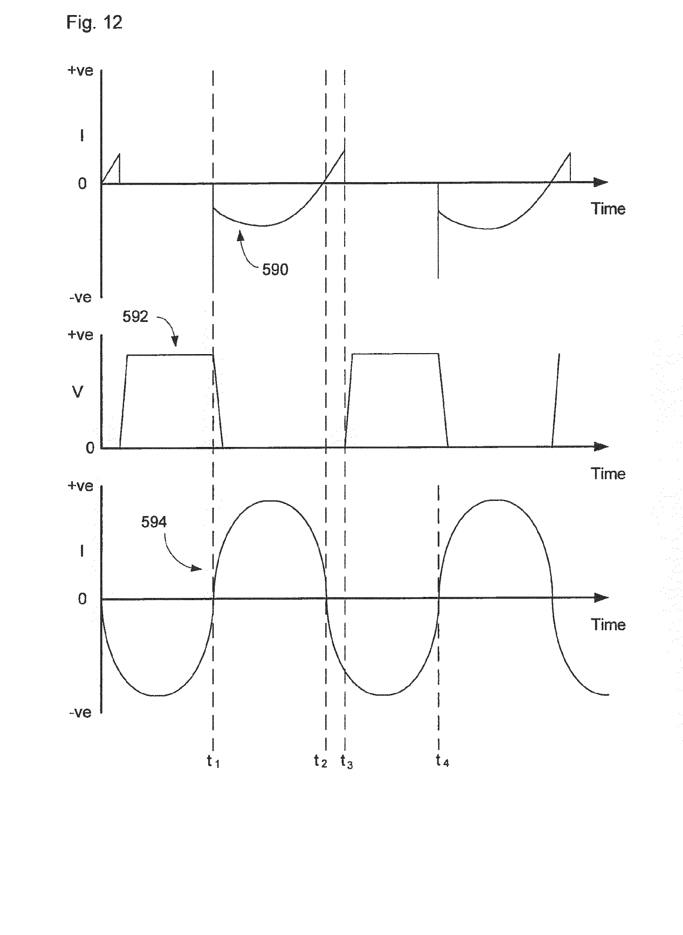

Figure 12 shows a series of traces of the drain current, drain voltage and receiver resonator current for various parts of the circuit shown in Figure 10 as a function of time;

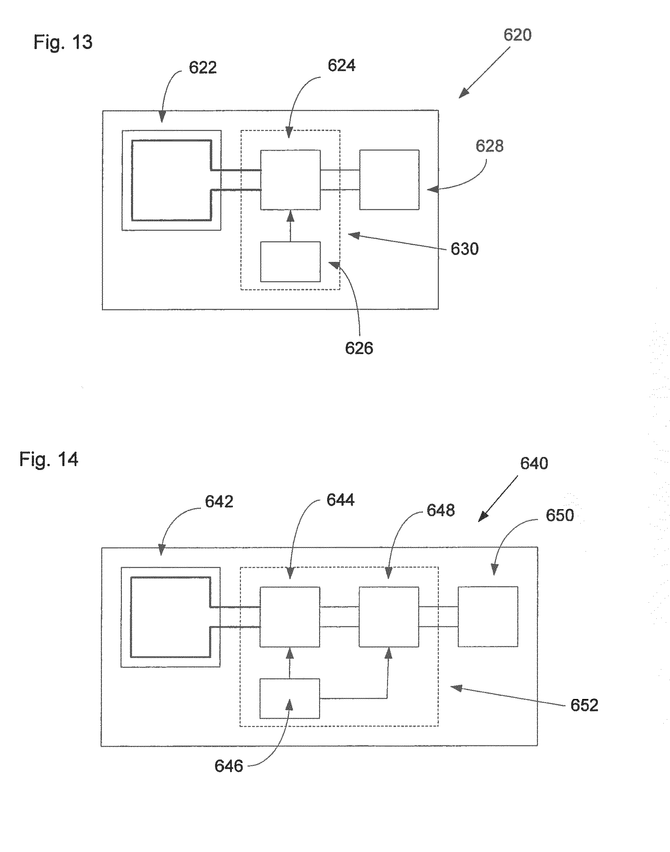

Figure 13 shows a schematic block diagram of an electrical device according to the invention and including a wireless power receiver operating as a voltage regulator; and
Figure 14 shows a schematic block diagram of an electrical device according to the invention and including a wireless power receiver including a DC-DC converter

In the drawings, like items in the different Figures share common reference numerals unless indicated otherwise.

Embodiments of the invention will now be described within the context of the Alliance for Wireless Power wireless power transfer system reference model, but merely by way of example. The invention is not limited to that specific model, nor standard, but can be used in any wireless power transfer system using a receiver resonator to wirelessly receive transferred electrical power.

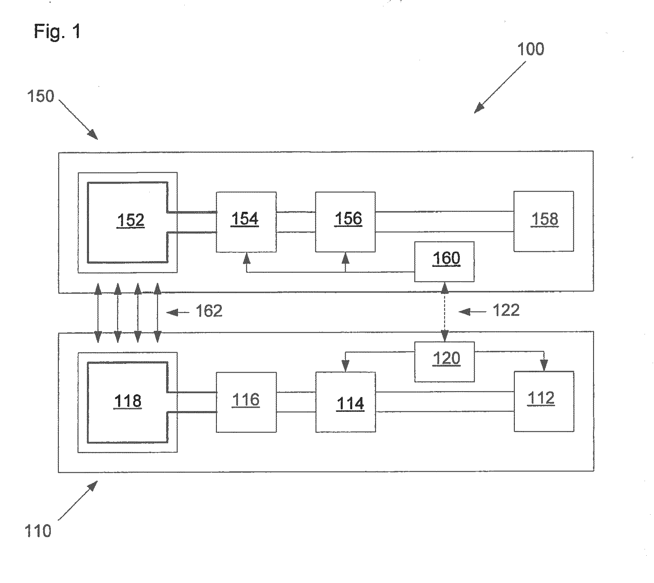

Figure 1 shows a schematic block diagram of a wireless power transfer system 100 including a power transmitting unit 110 and a power receiving unit 150 not using the invention. The power transmitting unit 110 includes a power supply 112, connected to a power amplifier 114 which is connected via an impedance matching circuit 116 to a transmitter 118 resonator. A controller 120 includes a microcontroller which controls operation of the power supply and power amplifier to control the AC electrical power supplied to the transmitter resonator. Controller 120 also includes out-of-band signalling circuitry which provides a wireless bidirectional communication link 122, for example a Bluetooth Low Energy link operating at 2.4GHZ, for communicating with a controller 160 of the power receiving unit 150.

The power receiving unit 150 includes a receiver resonator 152 which is connected to a rectifier 154 which is connected to a DC to DC converter 156 which is connected to a load to which it is intended to transfer electrical power, for example a rechargeable battery. As noted above a controller 160 is also provided and includes a microcontroller which controls operation of the rectifier 154 and DV to DC converter 156 and also includes out-of-band signalling circuitry to provide the wireless bidirectional communication link 122.

The transmitter resonator 118 and receiver resonator 152 are arranged, or other otherwise configured, to operate at a fixed frequency, for example 6.78MHz ± 15kHz, and electromagnetically couple via mutual inductance of an electromagnetic field 162. The strength of electromagnetic coupling between the transmitter resonator and receiver resonators depends on a number of physical factors, including, for example, the area of the respective antennae, their separation, their inductance, and is generally denoted in the art by a coupling factor k.

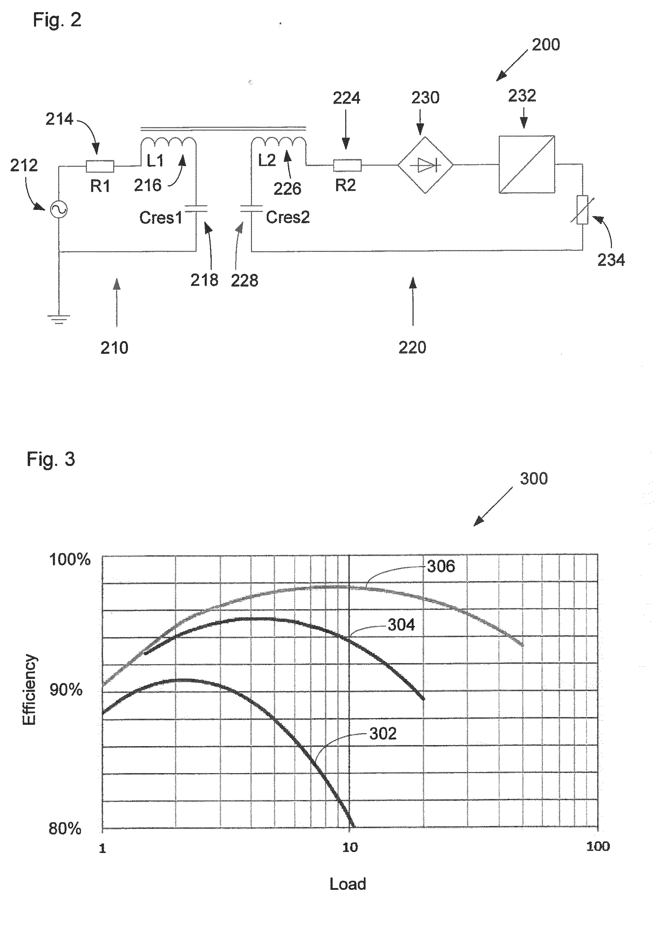

Figure 2 shows a schematic equivalent circuit diagram 200 for the basic power transfer system 100. A first transmitter part 210 represents the power transmitting unit 110 and a second receiver part 220 represents the power receiving unit. In the first part, the power supply 112, power amplifier 114 and impedance matching circuit 116 are represented simply by a source of AC electrical power 212. The transmitter resonator, which in practice comprises one or more loops of an antenna, is represented by an inductor 216 with inductance L1, a resistor 214 corresponding to the ohmic loss resistance R1 of the antenna, and a tuning capacitor 218 with capacitance Cres1 to tune the resonant frequency of the transmitter resonator.

Similarly, the receiver resonator, which in practice comprises one or more loops of an antenna, is represented by an inductor 226 with inductance L2, a resistor 224 corresponding to the ohmic loss resistance R2 of the antenna, and a tuning capacitor 228 with capacitance Cres2 to tune the resonant frequency of the receiver resonator. The receiver part 220 also includes the rectifier 230, DC to DC converter 232 and the load 234 represented by a variable resistor.

The efficiency of the power transfer from the power transmitter unit 210 to the load 234 depends on both the coupling between the transmitter resonator and the receiver resonator and also the load impedance 234. For example, Figure 3 shows a graph 300 illustrating the efficiency of power transfer as a function of the load impedance for coupling factors k=0.05 (line 302), k=0.1 (line 304) and k=0.2 (line 306). As can be seen, for a certain coupling factor, there is an optimum load impedance for which the power transfer efficiency is maximised. At greater and lesser value of the load impedance, the efficiency can decrease significantly from the maxim value.

Control of the extracted power in the receiver circuit 220 is not simple. As noted above, for high efficiency, the load 234 should present a certain impedance to the resonator. This can be achieved using the DC-DC converter 232. A DC-DC converter normally has a negative input impedance, but using a low bandwidth, or slow, control loop over the control link 122, the input of the DC-DC converter behaves resistively for higher frequencies. Hence, the system can be controlled to settle at a voltage that gives the best transfer efficiency. The DC-DC converter can act as an impedance transformer. For example if a buck converter topology is used, then its input impedance will always be higher than the output or lead impedance. The control loop can be used to control the DC-DC converter so that the load seen by the resonator corresponds to, or is closer to, that required for maximum efficiency even though the load impedance 234 itself cannot be changed. The DC-DC converter then converts the power to the desired load voltage. The Bluetooth link 122 enables feedback control of the transmitted power by controlling the power supply 112 and/or power amplifier 114 in the power transmitter unit 110.

Although the DC-DC converter can help provide a stabilized output voltage for the load and high power transfer efficiency it adds to the complexity, size and power consumption of the power receiving unit 150.

Figure 4 shows a schematic circuit diagram of a power transmission system 400 according to the invention and including a power receiving unit 420 also according to the invention. The power transmission unit 410 is similar to that shown in Figure 3 and corresponding reference numerals are used. The power receiving unit 420 includes a resonator 430 the same as that shown in, and described with reference to, Figure 2 and represented by inductor 426, resistor 424 and capacitor 428. A rectifier 440 with a full bridge topology of first to fourth diodes 442, 444, 446, 448 is connected to the receiver resonator 430 and includes a smoothing capacitor 449 across its output to which the load 450 is also connected. A switching element or arrangement 460 is also provided and is arranged to provide a short circuit across the output of the receiver resonator 430.

The switching element and rectifier provide a number of functions.

Firstly, the full bridge rectifier 440 provides an impedance transformation factor of approximately π²/8 ≈1.23 and so transforms the impedance of the load impedance 450 as seen by the receiver resonator 430. Hence, the rectifier may provide a degree of impedance transformation so that the load impedance appears to the receiver resonator 430 to be closer to the optimal load impedance for greater power transfer efficiency.

When resonating, the receiver resonator 430 behaves as a current source. Hence, the receiver resonator 430 and full bridge rectifier 440 basically behaves as a current source with a parallel output impedance 450. The output current depends in a linear way on the output voltage delivered by the rectifier 440. The nominal output voltage may be determined by the best efficiency. However, although there is a maximum in the efficiency curve for the arrangement of Figure 4, the efficiency curve is reasonably flat for higher voltages, and so a deviation in voltage does not lead to much change in efficiency.

The switching element 460 can be operated to short circuit the output of the receiver resonator 430 so if the current delivered to the power receiving unit is higher than the current required by the load, then excess current is not rectified and delivered to the load, but shorted and stored in the resonant tank circuit of the receiver resonator 430. Hence, any excess current stays in the resonant circuit 430. No DC-DC converter is needed, saving at least one inductor and one large capacitor. Also efficiency is increased, since there is no loss from a DC-DC converter. Further, as described in greater detail below, by appropriately timing the switching, lossless switching is possible.

Figure 5 shows a schematic block diagram of an embodiment of the power transfer system 500 including a full bridge rectifier in 440 but using active or synchronous rectification rather than diodes as in the embodiment shown in Figure 4. As is generally known in the art, in synchronous or active rectification actively controlled switching elements are used. The rectification stage 420 includes first 502, second 504, third 506 and fourth 508 transistors, which may be MOSFETs, arranged in a full bridge topology and a controller 510 which includes an active rectification controller. The active rectification controller part of the overall controller 510 is connected to a respective gate of each of the transistors 502, 504, 506, 508 to supply signals to turn the transistors on or off at appropriate stages during the cycle of the receiver resonator 430.

The switch 460 can be implemented using the combination of either the second 504 and fourth 508 (a first shorting pair) transistors or the first 502 and third 506 (a second shorting pair) transistors. Turning both the second 504 and fourth 508 transistors on effectively provides a short circuit across the receiving resonator 430. Alternatively turning both the first 502 and third transistor 506 on effectively provides a short circuit across the receiving resonator 430.

During full bridge rectification, a first rectification pair (the first 502 and fourth 508) of transistors is turned on and a second rectification pair (the second 504 and third 506) of transistors is turned off during a first half of the receiver resonator cycle (e.g. the positive voltage half). Then the first pair of transistors is turned off and the second pair of transistors is turned on during a second half of the receiver resonator cycle (e.g. the negative voltage half). The duty cycle of this switching can be varied to control the electrical power supplied to the load 450 and toward the end of each half of the rectification cycle, any excess current can be returned back into the receiver resonator 430 by turning on either both the second 504 and fourth 508 transistors or the first 502 and third 506 transistors.

Although this switching of the shorting pair of transistors can in principle occur at any moment during the cycle of the receiver resonator, if it is synchronized with zero-crossings of the inductor current, then the current in the switching pair of transistors will also be zero and reduced loss, or even lossless, switching is possible.

Figure 6 shows a circuit diagram of the power transfer system 500 corresponding to Figure 5 and showing further details of the controller 510. In Figure 6, the various electrical components and devices making up the controller 510 and active rectification controller part thereof are distributed around the circuit. The controller 510 includes an output voltage measuring circuit 710 which measures the output voltage of the rectifier Vout which is being supplied to the load and providing a control signal Vcontrol to other parts of the controller 510. The circuit 710 includes an error amplifier 712 which is connected to a reference voltage supply 714, e.g. of 5V, and which outputs a control signal corresponding to the difference between Vout and the reference voltage. Hence, the reference voltage value is set at an output voltage level appropriate for the load.

The controller 510 also includes a receiver resonator current sensing circuit 720 which includes a comparator 722 having its inputs connected to either side of a current sensing resistor 724 provided within the receiver resonator circuit. The comparator 722 outputs a signal indicating a zero crossing of the receiver resonator current. For positive currents, i.e. a current flowing from R2 to L2, the output of the comparator 722 is high or one. For negative currents it is low or zero. Hence, the comparator changes state at zero current crossings and produces a square wave output signal.

The active rectification controller includes first 730 and second 750 circuits comprising similar arrangements of components. A first pair of comparators 732, 752 receive at their respective inputs a signal indicating the voltage across the fourth 508 and second 504 transistors respectively and also a reference voltage of -0.3V (i.e. -0.3V relative to ground). This allows detection of conduction of the body diode of the second transistor 504 and fourth transistor 508. The outputs of the first pair of comparators 732, 752 are connected to the SET input of respective first flip-flops 734, 754. The first output, Q, of each respective flip-flop is connected to the respective gates of the fourth 508 and second 502 transistors to turn them on (when Q is high) or off (when Q is low). The second output, Q̅, of each respective flip-flop is connected to a first re-set switch of a saw tooth signal generator circuit 736, 756 (which may be constructed from a capacitor, a current source and a pair of re-set switches).

The RESET input of each first flip-flop 734, 754 is connected to a respective one of a third pair of comparators 738, 758 a respective first input of which is connected to the output of circuit 710 and receives the signal Vcontrol and a respective second input of which is connected to the output of the respective saw tooth signal generator circuits 736, 756.

A second pair of comparators 740, 760 also receive at their respective inputs the signal indicating the voltage across the fourth 508 and second 504 transistors respectively and also a reference voltage of Vout+0.3V (i.e. +0.3V relative to Vout, where Vout is the voltage output by the rectifier to the load 450 and which is regulated to 5V by the circuit) to detect conduction of the body diode of transistors 502 and 506. The magnitude of the bias voltage 0.3V is not significant and may be between 0V and 0.6V. The outputs of the second pair of comparators 740, 760 are connected to the SET input of respective second flip-flops 742, 762. The first output, Q, of each respective flip-flop 742, 762 is connected to the respective gates of the third 506 and first 502 transistors to turn them on (when Q is high) or off (when Q is low).

The RESET input of each second flip-flop 742, 762 is connected to the output of the zero current detecting circuit 720, and flip flop 742 receives the signal via an inverter or not gate 744. This signal is also supplied to respective second re-set switches of the saw tooth signal generator circuits 736, 756.

As described in greater detail below with reference to Figure 7, the controller 510 operates to keep the output voltage Vout at, or close to, 5V. Any higher level control, e.g. of a battery charging cycle, can be provided by a higher level controller or control elements, such as the control loop of the system illustrated in Figure 1.

As noted above, the output of zero current detector 720 is a square wave signal which is high when the current is positive and low when the current is negative and which transitions at zero current crossings. The two legs of the rectifier see AC signals with opposite polarity. Inverter 744 acts to provide a signal in circuit 730 indicating a zero current event with an opposite polarity to a signal in circuit 750 indicating a zero current event. The two reset switches in each saw tooth generator 736, 756 are used to reset the respective saw tooth signals. The saw tooth signals start at zero after each zero-crossing event.

Figure 7 shows schematic plots of the drain current 602 through the second transistor 504 (solid line) and the drain current 604 through the fourth transistor 508 (dashed line), the drain voltage 606 of the second transistor 504 (solid line) and the drain voltage 608 of the fourth transistor 508 (dashed line) and the current flowing in the receiver resonator 610 as a function of a common time axis. At a time preceding time t₁, the second transistor 504 is turned off (its drain current 602 is zero and its drain voltage is finite and positive), the fourth 508 transistor is turned on (its drain current 604 is non-zero and its drain voltage 608 is zero), the first transistor 502 is also turned on and so the first 502 and fourth 508 transistors are rectifying the voltage supplied to the load. At this time the current in the receiver resonator 610 is negative and heading toward zero. At time t₁, the current in the receiver resonator 430 crosses zero and the second transistor 504 is turned on to create the short circuit across the receiver resonator. The drain current of the second transistor is zero or close to zero and so the power dissipated at switch on of the second transistor 504 is zero or close to zero. In practice, the second transistor 504 will turn on shortly after the current has crossed zero and so while the current is not exactly zero it will be relatively small. Also, initially the body diode of the transistor may conduct so also the turn on voltage may not be exactly zero, more like 0.6V, but it is relatively low and therefore results in very little switching loss.

As illustrated in Figure 7, just after t₁, the drain voltage 606 of the second transistor begins to decrease to zero. Between times t₁ and t₂ transistors 504 and 508 are both conducting and provide a short circuit across the receiver resonator and so no electrical power is rectified or delivered to the load 450. At time t₂, the fourth transistor 508 is turned off and its drain current 604 drops to zero and its drain voltage 608 begins to rise. However, at turn off, the drain voltage 608 of the fourth transistor is zero, or close to zero, and so the power dissipated in that transistor is zero or close to zero.

After time t2, and once the drain voltage 608 of the fourth transistors 508 has risen, the third transistor 506 is turned on and acts together with the second transistor 504 to rectify the current from the receiver resonator. Then, when the receiver resonator current 610 passes through zero again at time t₃, the fourth transistor 508 is turned on again to short circuit the current in the receiver resonator. On the zero crossing of the receiver resonator current 610, the saw tooth signal generators 736, 756 each alternately start and define the respective short-circuit times for the fourth 508 and second 504 transistors. The second and fourth transistors 504 and 508 turn on when their drain voltage is below -0.3V as determined by comparators 760 and 740. The first and third transistors 502 and 506 are turned on when the drain voltage of the second 504 and fourth 508 transistors is at Vout+0.3V as determined by comparators 752 and 732". The first 502 and third 506 transistors each alternately turn off at the next zero crossing of their respective drain currents. The second 504 and fourth 508 transistors are each alternately turned off after their respective saw tooth generator delay time has expired.

Hence, every half cycle of the receiver resonator current 610, when the receiver resonator current crosses zero, the second and fourth transistors alternately are turned on for a short time to short circuit the receiver resonator circuit and retain any excess current which does not need to be supplied to the load, with no or close to no switching loses.

It will be appreciated that instead of alternately switching the second and fourth transistors, the first and third transistors can be used.

Figure 9 shows a schematic circuit diagram 520 of a further embodiment of a power transfer system including a power receiving unit according to the invention. The power transfer system is similar to that shown in Figure 4, but the rectifier 530 has a different topology. In particular rectifier 530 has a voltage doubler topology and comprises a first 532 and a second 534 diode and a first 536 and a second 538 capacitors connected across the load 450.

As noted above, the rectifier may be used to provide impedance transformation and the voltage doubler topology may provide an impedance transformation of about π²/2 ≈ 4.9. Again, a switch 460 is provided which is arranged and is operable to provide a short circuit across the receiver resonator 430 so that current not required for supplying power to the load can be retained in the receiver resonator. The first and second capacitors 536 and 538 are alternately charged when the input voltage from the receiver resonator appropriately biases and switches the first and second diodes 532, 534 respectively on and off. The output voltage is approximately twice the input voltage.

The switch 460 is a bi-directional blocking and can be realised by a pair of MOSFETs connected in anti-series as illustrated in the schematic block circuit diagram 540 of Figure 9. A bi-directional blocking switch is used as the voltage across switch 460 is both positive and negative. Otherwise, capacitor 428 Cres2 could be charged to a DC voltage, making it impossible to charge capacitor 538 during the negative half of the cycle. As illustrated in Figure 9, the switch 460 is realised by a first FET 542 and a second FET 544 connected in anti-series across the output of the receiver resonator 430. The source of the first FET 542 is connected to the source of the second FET 544 and their respective gates are connected together. A common switching signal can be supplied to their gates by a controller 546 which receives a signal indicative of the output voltage Vout as part of a control loop. The basic operation of the circuit 540 is similar to that described above for circuit 500 except the voltage doubler acts as a half-bridge rectifier and rectifies only once for each cycle of the receiver resonator, rather than as a full-bridge rectifier and also does not synchronise switching events with receiver resonator current zero crossings.

Figure 10 shows a schematic circuit diagram 550 of a further embodiment of a power transfer system including a power receiving unit according to the invention. The power transfer system is similar to that shown in Figure 4, but the rectifier 560 has a different topology. In particular rectifier 560 has a Greinacher voltage doubler topology and comprises a first buffer capacitor 562, first 564 and a second 566 diodes and an output capacitor 568 connected across the load 450. In terms of electrical operation of the circuit, buffer capacitor 562 can be merged with the receiver resonator capacitor Cres2 and so is not shown in Figure 11.

As noted above, the rectifier may be used to provide impedance transformation and the Greinacher voltage doubler topology may provide an impedance transformation of about π²/2 ≈ 4.9. Again, a switch 460 is provided and which is arranged and is operable to provide a short circuit across the receiver resonator 430 so that current not required for supplying power to the load can be retained in the receiver resonator.

Similarly to the first embodiment illustrated in Figure 5, an active rectification or synchronous rectification approach is also possible with the Greinacher voltage doubler topology and is illustrated in Figure 11. Figure 11 shows a schematic circuit diagram of the power transfer system in which the switch 460 and Greinacher voltage doubler rectifier 560 are combined in a single active rectification circuit 580. The first diode 564 is implemented using a first transistor 582, such as a MOSFET, and the second diode 566 is implemented using a second transistor 584 arranged with the Greinacher voltage doubler circuit topology. The respective gates of the first 582 and second 584 transistors are connected to a controller 586 which controls operation of the rectifier and can generate respective control signals to turn the first 582 and second 584 transistors on and off. Controller 586 can operate generally similarly to controller 510, but modified for half-bridge rectification as described in greater detail below, and can receive a signal representing the rectifier output voltage Vout as part of a control loop.

Similarly to the active rectification full bridge circuit 500, substantially lossless switching is possible with the circuit of Figure 11 by turning the second transistor 584 on to short circuit the output of the receiver resonator 430 at the same time as the receiver resonator current passes through zero.

Figure 12 shows schematic plots of the drain current through the second transistor 590, the drain voltage of the second transistor 592 and the current flowing in the receiver resonator 594 as a function of a common time axis. At a time preceding time t₁, the second transistor 584 is turned off (its drain current 590 is zero and its drain voltage 592 is finite and positive), and the first transistor 582 is turned on and is rectifying the voltage supplied to the load. At this time the current in the receiver resonator 594 is negative and heading toward zero. At time t1, the second transistor 584 turns on, the receiver resonator current crosses zero at time t2 and at time t3, the second transistor 584 is turned off again. At time t3, the first switch 582 turns on and 582 turns off again at a time t4 corresponding to the start of a next cycle.

The Greinacher voltage doubler operation can also be realised using the active rectification full bridge circuit illustrated in Figure 5. If the third transistor 506 is not switched on by a positive gate voltage, then the third transistor 506 will not conduct any current when the fourth transistor 508 is turned on. So if the fourth transistor is kept turned on and is effectively a short circuit and the third transistor 506 is not on, and is effectively an open circuit, then the first 502 and second 504 transistors have the same topology as the Greinacher voltage doubler circuit. Hence, the circuit illustrated in Figure 5 can be used to implement either a full bridge topology or a Greinacher voltage doubler topology, depending on the control signals used to control the transistors.

Both the full bridge and the Greinacher rectifier topologies may be used in two different applications. Firstly, they may be used as a voltage regulator, directly controlling the output voltage as illustrated in Figure 13. Figure 13 shows a power receiving device 620 including a receiver resonator 622, a full bridge or Greinacher rectifier 624 and associated controller 626 (as illustrated in Figures 4 and 5 and 9 and 10 respectively) and a load 628, such as a re-chargeable battery. In this case, no DC-DC converter is required. It will be appreciated that one or more parts of the device illustrated in Figure 13 may be realised as an integrated circuit. In particular, the switch and rectifier 624 and controller 626 may be realised by a semi-conductor device 630 in the form of a package including a die and a lead frame.

Secondly, the full bridge and Greinacher rectifier topologies may be used as a stabilizer for a DC-DC converter as illustrated in Figure 14. Figure 14 shows a power receiving device 640 including a receiver resonator 642, a full bridge or Greinacher rectifier 644 and associated controller 646 (as illustrated in Figures 4 and 5 and 10 and 11 respectively), a DC-DC converter 648 and a load 650, such as a re-chargeable power supply. Without a controlled rectifier, it may be difficult to find a stable operating point for a DC-DC converter. Hence, the rectifier of the invention can also be used to make a DC-DC converter more stable.

It will be appreciated that one or more parts of the device illustrated in Figure 14 may be realised as an integrated circuit. In particular, the switch and rectifier 646, controller 646 and DC-DC converter 648 may be realised by a semi-conductor device 652 in the form of a package including a die and a lead frame.

Since efficiency is maximum for a certain load impedance, and as the voltage output by the rectifier is fixed, a DC-DC converter may be used to adjust the voltage level output from the rectifier to a more appropriate level for the load to improve efficiency. Hence, for greater efficiency the combination of rectifier and DC-DC converter of Figure 14 may be preferred. However, if efficiency is less important, but cost or simplicity are important then the approach of Figure 12 may be preferred.

The invention can be used for wireless links for any type of power transfer application. A particular application is wireless charging. Wireless charging may be used in a wide range of products and devices, including, by way of example only, mobile phones, household appliances (e.g. kitchen, bathroom), electric vehicles and medical devices. From reading the present disclosure, other variations and modifications will be apparent to the skilled person. Such variations and modifications may involve equivalent and other features which are already known in the art of wireless power transmission and which may be used instead of, or in addition to, features already described herein.

## Claims

1. A wireless electrical power receiver, comprising:
a receiver resonator arranged to inductively generate an AC electrical current;
a rectifier connected to the receiver resonator to receive and convert the AC electrical current from the receiver resonator into DC electrical power;
a load arranged to receive DC electrical power from the rectifier;
a switching arrangement to selectively provide a short circuit to retain the AC electrical current within the receiver resonator when the switch is operated; and
a controller configured to supply a control signal to operate the switching arrangement to control the AC electrical current supplied to the rectifier.

2. The wireless electrical power receiver of claim 1, wherein the controller is further configured to supply the control signal to operate the switching arrangement to provide the short circuit when the AC electrical current in the receiver resonator passes through zero.

3. The wireless electrical power receiver of claim 2, wherein the controller is further configured to remove the control signal to cause the switching arrangement to remove the short circuit based on the amount of DC power required by the load.

4. The wireless electrical power receiver of claim 1, wherein the rectifier is an active rectifier which comprises a plurality of electrically operable switches and wherein the controller is further configured to supply rectification control signals to the plurality of electrically operable switches to control rectification of the AC electrical current into DC electrical power.

5. The wireless electrical power receiver of claim 4, wherein the switching arrangement comprises one or more of the plurality of electrically operable switches of the rectifier.

6. The wireless electrical power receiver of claim 5, wherein the rectifier has a full wave bridge topology.

7. The wireless electrical power receiver of claim 6, wherein the controller is further configured to supply the control signal to operate the switching arrangement to provide the short circuit each time the AC electrical current in the receiver resonator passes through zero.

8. The wireless electrical power receiver of claim 5, wherein the rectifier has a Greinacher voltage doubler topology.

9. The wireless electrical power receiver of claim 8, wherein the controller is further configured to supply the control signal to operate the switching arrangement to provide the short circuit every other time the AC electrical current in the receiver resonator passes through zero.

10. The wireless electrical power receiver of claim 1, wherein the rectifier has a voltage doubler topology.

11. The wireless electrical power receiver of claim 10, wherein the switching arrangement comprises a pair of transistors connected in anti-series

12. The wireless electrical power receiver of any preceding claim, wherein the rectifier has a rectifier topology and the rectifier topology provides impedance matching between the receiver resonator and the load and no other impedance matching network is included in the wireless electrical power receiver.

13. The wireless electrical power receiver of any preceding claim, and further comprising a DC-DC converter arranged between the rectifier and the load to receive DC electrical power from the rectifier and to supply converted DC electrical power to the load.

14. An electrical device including a wireless power receiver as claimed in any preceding claim and wherein the load is a re-chargeable battery.

15. A method for extracting DC electrical power from an induced AC electrical signal, the method comprising:
rectifying an AC electrical current produced by induction by a receiver resonator into DC electrical power; and
periodically short circuiting the receiver resonator to retain the AC electrical current within the receiver resonator.
